# EUROPÄISCHE PATENTSCHRIFT

(11) **EP 3 092 430 B1**
(45) Veröffentlichungstag und Bekanntmachung des Hinweises auf die Patenterteilung: **03.01.2018**
(21) Anmeldenummer: 15700351.8
(22) Anmeldetag: 08.01.2015
(51) Int. Cl.: F16K 41/10, F16K 29/00

(54) **VENTILEINRICHTUNG ZUM STEUERN EINES FLUIDS, INSBESONDERE EINES ABRASIVEN DICKSTOFFS**
VALVE MECHANISM FOR CONTROLLING A FLUID, IN PARTICULAR AN ABRASIVE HIGH-VISCOSITY MATERIAL
ENSEMBLE VANNE SERVANT À COMMANDER UN FLUIDE, EN PARTICULIER UN LIQUIDE ÉPAIS ABRASIF

(30) Priorität: 08.01.2014 DE 102014200150
(43) Veröffentlichungstag der Anmeldung: 16.11.2016
(73) Patentinhaber: Binder GmbH, 89081 Ulm (DE)
(72) Erfinder: BINDER, Robert, 89150 Laichingen (DE)
(74) Vertreter: BRP Renaud & Partner mbB Rechtsanwälte Patentanwälte Steuerberater
(86) Internationale Anmeldenummer: PCT/EP2015/050243
(87) Internationale Veröffentlichungsnummer: WO 2015/104323

(56) Entgegenhaltungen:
- FR-A- 1 259 417
- GB-A- 652 296
- GB-A- 1 210 065
- GB-A- 2 242 255
- JP-A- S6 073 184
- US-A- 3 154 288

## Beschreibung

Die Erfindung betrifft eine Ventileinrichtung zum Steuern eines Fluids, insbesondere eines abrasiven Dickstoffs.

Eine Ventileinrichtung ist ein Bauteil zum Einstellen oder Regulieren eines Fluidstroms. Das Einstellen bzw. Regulieren erfolgt dabei funktionsgemäß durch Verstellen eines Ventilkörpers innerhalb eines Fluidkanals der Ventileinrichtung. In einer geschlossenen Position des Ventilkörpers wird eine im Fluidkanal vorgesehene Ventilöffnung vollständig verschlossen, in einer geöffneten Position freigegeben. Dabei können Ventileirichtungen derart konzipiert werden, dass der vom Ventilkörper freigegebene Strömungsquerschnitt der Ventilöffnung linear mit der Stellposition des Ventilkörpers zwischen geschlossener und geöffneter Position skaliert. In diesem Fall eignen sich die Ventileinrichtungen nicht nur zum vollständigen Unterbinden, sondern zum variablen Einstellen eines von außen vorgegebenen Fluidstroms. Solche Ventileinrichtungen werden als zentraler Bestandteil einer Regelungseinrichtung genutzt, welche eine hochgenaue Regelung des Fluidstroms gestattet.

In Verbindung mit besagten Ventileinrichtungen kommen als Fluide nicht nur Flüssigkeiten mit hoher Fluidität, sondern auch sog. Dickstoffe in Betracht. Unter dem Begriff "Dickstoffe" sind im Folgenden alle Gemische aus flüssigen und festen Bestandteilen gefasst. Verschiedene Dickstoffe mögen sich dabei in ihren physikalischen oder chemischen Eigenschaften unterscheiden, so beispielsweise hinsichtlich ihres spezifischen Gewichts, ihres Trockenstoffgehalt, oder aber hinsichtlich ihrer mechanischen und chemischen Eigenschaften gegenüber anderen Werkstoffen. Sogenannte abrasive Dickstoffe weisen gegenüber Werkstoffen, mit denen sie in Kontakt kommen, eine schleifende Wirkung auf, welche generell auf die grobe Körnung der festen Bestandteile des Dickstoffs zurückzuführen ist.

Problematisch ist indes der Einsatz solcher abrasiver Dickstoffe in Ventileinrichtungen der oben beschriebenen Art, da sie die in der Ventileinrichtung verwendeten Bauteile aufgrund ihrer Schleifwirkung in nicht unerheblichem Maße zu schädigen vermögen. Besonders gefährdet sind dabei die beweglichen Bauteile der Ventileinrichtung sowie gleichermaßen die in der Ventileinrichtung verbauten Dichtungselemente, deren Verschleiß durch die abrasive Wirkung des Dickstoffs erheblich beschleunigt werden kann. Dies gilt in besonderem Maße, wenn der besagte Dickstoff unter hohem Druck - aus dem Stand der Technik bekannt sind beispielsweise Ventileinrichtungen, die im Zusammenspiel mit modernen Hochdruckpumpen die druckgeregelte Förderung von Dämmstoffe oder Lacken unter einem Fluiddruck von 400 bar oder mehr erlauben - durch die Ventileinrichtung strömt, was zu einer Verstärkung der abrasiven Wirkung der Dickstoffe führt.

Die vorliegende Erfindung beschäftigt sich daher mit dem Problem, für eine Ventileinrichtung eine verbesserte Ausführungsform anzugeben, die sich insbesondere durch eine verbesserte Verschleißresistenz auszeichnet.

Diese Aufgabe wird durch den Gegenstand der unabhängigen Patentansprüche gelöst. Bevorzugte Ausführungsformen sind Gegenstand der abhängigen Ansprüche.

Grundgedanke der Erfindung ist demnach, die besonders verschleißgefährdeten Komponenten der Ventileinrichtung - hierzu zählt der innerhalb eines Fluidkanals der Ventileinrichtung verstellbare Ventilkörper - mittels eines membranartigen Dichtungselements vor einem verschleißfördernden Kontakt mit dem den Fluidkanal durchströmenden Fluid zu schützen.

Um nun zu verhindern, dass die membranartige Ausbildung des Dichtungselements aufgrund der bei der Förderung von Dickstoffen bisweilen auftretenden extrem hohen Fluiddrücke - diese können Werte von 400 bar oder mehr annehmen - eine teilweise oder gar vollständige Zerstörung derselben bewirkt, wird vorgeschlagen, das Dichtungselement derart im Fluidkanal der Ventileinrichtung anzuordnen, dass es sich an einem im Fluidkanal vorgesehenen Wandabschnitt abstützen kann. Dieser Wandabschnitt kann Teil des Gehäuses der Ventileinrichtung oder - in einer sich in besonderem Maße elegant erweisenden Ausführungsform - Teil eines relativ zum Gehäuse beweglichen Ringkolbens sein, wie im Folgenden noch detaillierter erläutert werden wird. Entscheidender Vorteil der hier vorgestellten Lösung ist, dass eine als Dichtungselement verwendete Membran nicht nur mit ihren beiden Endabschnitten zwischen Gehäuse und Ventilkörper der Ventileinrichtung eingespannt wird; vielmehr wird dem membranartigen Dichtungselement zusätzlich zu besagtem Einspannen zwischen Gehäuse und Ventilkörper eine nahezu vollständige flächige Abstützung an einem Wandabschnitt der Ventileinrichtung ermöglicht, so dass auch in einem druckbeaufschlagten Zustand des Fluidkanals eine Beschädigung der Membran - beispielsweise in Form von Rissbildungen oder anderem Materialversagen - bis hin zur vollständigen Zerstörung unterbunden werden kann.

Im Gegensatz zu herkömmlichen Dichtungselementen in der Art von Dichtungsringen o.ä. ist das hier vorgestellte Dichtungselement bei der Bewegung des Ventilkörpers keinerlei Gleitreibung ausgesetzt, welche in Verbindung mit einem abrasiven Dickstoff zu einer verschleißbedingten Herabsetzung der Dichtungseigenschaften führen würde. Durch geeignete konstruktive Maßnahmen kann vom Fachmann im Idealfall dafür gesorgt werden, dass sich die Membran nicht nur abschnittsweise im Bereich des oben beschriebenen Wandabschnitts, sondern möglichst im gesamten Bereich zwischen ihren beiden Endabschnitten an geeigneten mechanischen Bauteilen der Ventileinrichtung abstützen kann. Funktionsgemäß sorgt das Dichtelement dann für einen effektiven Schutz der auf einer vom Fluidkanal abgewandten Seite des Dichtungselements angeordneten Komponenten vor einer Beschädigung durch Dickstoff. Besonders gut vor Beschädigung schützen lässt sich der verstellbar am Ventilgehäuse gelagerte und somit besonders verschleißanfällige Ventilkörper der Ventileinrichtung, welcher zwischen einem geöffneten Zustand, in welchem er den Fluidkanal zum Durchströmen mit dem Fluid freigibt, und einem geschlossenen Zustand, in welchem er den Fluidkanal fluiddicht verschließt, bewegt werden kann. Das Dichtungselement entfaltet im erfindungsgemäßen Szenario gerade im Bereich der zueinander beweglichen Kontaktflächen von Ventilkörper und Ventilgehäuse seine Schutzwirkung, da ein unerwünschtes Eindringen des abrasiven Dickstoffs in einen Zwischenraum zwischen diesen beiden Flächen zu einem gleitreibungsbedingten Abschleifen deren Oberflächen führen würde.

Bei einer bevorzugten Ausführungsform ist im Fluidkanal eine Ventilöffnung vorgesehen, welche von einem Ventilsitz eingefasst ist. Der Ventilkörper ist wenigstens zweiteilig ausgebildet und besitzt ein Verschlusselement, welches einen fluiddichten Verschluss der Ventilöffnung erlaubt, indem es in einer Verschlussposition auf dem Ventilsitz aufsitzt. Um besagtes Verschlusselement zum Öffnen der Ventilöffnung vom Ventilsitz wegzubewegen, steht ein Betätigungselement zur Verfügung, welches das Verschlusselement zum Ventilkörper komplettiert. Im hier vorgestellten Szenario sollte das Verschlusselement stromauf der Ventilöffnung im Fluidkanal platziert sein, so dass es entweder - ohne externe Krafteinwirkung - von dem den Fluidkanal durchströmenden Fluid oder durch eine Federkraft gegen den Ventilsitz vorgespannt wird und die Ventilöffnung folglich verschließt. Vorteilhafterweise bietet es sich entsprechend an, das Betätigungselement stromab des Verschlusselements im Fluidkanal anzuordnen. Zum Öffnen der Ventilöffnung wird das Betätigungselement dann gegen das Verschlusselement und folglich dieses vom Ventilsitz weg gedrückt. Zu diesem Zweck kann das Betätigungselement mit einem externen Aktuator, beispielsweise in Form eines dem einschlägigen Fachmann bekannten Elektromotors, antriebsverbunden sein. Sobald die vom Betätigungselement auf das Verschlusselement ausgeübte Anpresskraft die vom Fluid erzeugte und in entgegengesetzter Richtung zu dieser wirkende Vorspannkraft betragsmäßig übersteigt, wird das Verschlusselement vom Ventilsitz wegbewegt und die Ventilöffnung folglich freigegeben. Erfindungsgemäß ist das besagte Betätigungselement als Hubkolben ausgebildet welcher entlang einer Hubrichtung im Fluidkanal bewegbar ist. Die reibungsarme Führung des Hubkolbens im Fluidkanal kann durch eine geeignete konstruktive Ausgestaltung des Ventilgehäuses, an welchem der Hubkolben gelagert wird, sichergestellt werden. Der Hubkolben verfügt über eine Außenumfangsfläche, an welcher das membranartige Dichtungselement mit seinem zweiten Endabschnitt befestigt werden kann. Dabei bietet es sich etwa an, das Dichtungselement in eine an der Außenumfangsfläche vorgesehene Ausnehmung einzuklemmen. In diesem Szenario kann das Dichtungselement einen hülsenartig ausgebildeten Abstützungsabschnitt besitzen, in dessen Bereich sich das Dichtungselement - also zusätzlich zur Abstützung am Wandabschnitt - an der Außenumfangsfläche des Hubkolbens abstützt.

Eine besonders lange Lebensdauer des Dichtungselements lässt sich durch eine konstruktiv besonders elegante Ausführungsform erzielen, bei welcher besagter Wandabschnitt in einem bezüglich der Hubrichtung definierten Profil eine konkave Oberflächenkontur aufweist. Auf diese Weise wird der Tatsache Rechnung getragen, dass das Dichtungselement in besagtem Profi sowohl im geöffneten als auch geschlossenen Zustand des Ventilkörpers im Bereich zwischen den beiden Endabschnitten eine gekrümmte Oberflächengeometrie aufweist, die beispielsweise die Gestalt eines Kreisbogens o.ä. annehmen kann. Die beschriebene konkave Oberflächenkontur des Wandabschnitts gestattet es wiederum dem Dichtungselement, sich kantenfrei und vollständig an die Oberfläche des konkaven Wandabschnitts anzuschmiegen, um den gewünschten erfindungsgemäßen Abstützungseffekt zu erzielen.

Bei einer fertigungstechnisch besonders einfach zu realisierenden Ausführungsform die nicht Teil der Erfindung ist ist der Wandabschnitt Teil des Gehäuses der Ventileinrichtung. Dabei kann zur Abstützung des Dichtungselements dienende Wandabschnitt einstückig am Gehäuse ausgeformt sein. Selbstverständlich kann das Ventilgehäuse vor dem Zusammenbau aber auch mehrteilig aufgebaut sein. Die verschiedenen Gehäusebauteile können dann im Zuge der Montage der Ventileinrichtung mittels dem einschlägigen Fachmann bekannter Verfahren - zu denken ist etwas an ein Verschweißen der einzelnen Bauteile des Gehäuses - aneinander befestigt werden. Bei einer vorteilhaften Weiterbildung der oben beschriebenen Ausführungsform erlaubt ein federelastisch ausgebildetes Dichtungselement einen besonders großen Verstellbereich des Hubkolbens zwischen seiner geöffneten und seiner geschlossenen Position. Ein solches federelastisches Dichtungselement kann sich beim Bewegen des Hubkolbens - und somit des daran befestigten zweiten Endabschnitts des Dichtungselements - vom geschlossenen in den geöffneten Zustand ausdehnen und somit für jede mögliche Verstellposition die erforderliche Abstützung des Dichtungselements am Wandabschnitt sichergestellt werden. Besonders zweckmäßig erfolgt die elastische Dehnung des Dichtungselements im Wesentlichen im Bereich des oben beschriebenen Abstützungsabschnitts, in dessen Bereich das Dichtungselement den Hubkolben entlang seiner Außenumfangsfläche umspannt. Eine Ventileinrichtung gemäß dem Oberbegriff des Anspruchs 1 ist aus dem Dokument GB 652,296 bekannt. Bei einer erfindungsgemäßen Ausführungsform ist der besagte Wandabschnitt, an welchem sich das Dichtungselement abzustützen vermag, nicht Bestandteil des Ventilgehäuses, sondern vielmehr Teil eines am Hubkolben entlang dessen Umfangsrichtung ausgeformten und somit zusammen mit diesem entlang der Hubrichtung bewegbaren Ringkolbens. In diesem Szenario ist im Gehäuse der Ventileinrichtung eine Fluidkammer vorgesehen, in welche der Fluidkanal entgegen der Hubrichtung des Hubkolbens übergeht, so dass sich der Hubkolben teilweise im Fluidkanal und teilweise in der Fluidkammer erstreckt. Fluidkammer und Fluidkanal werden durch den Ringkolben in Verbindung mit dem erfindungsgemäßen Dichtungselement, welches sich an der ersten Stirnseite des Ringkolbens abstützt, fluidisch voneinander getrennt. Da der Ringkolben zusammen mit dem Hubkolben entlang der Hubrichtung bewegbar ist, würde dieser beim Druckaufbau im Fluidkanal zusammen mit dem Hubkolben vom den Fluidkanal durchströmenden Fluid in Richtung der Fluidkammer weggedrückt. Weil das Dichtungselement einer solchen Bewegung des Ringkolbens aufgrund seiner Befestigung am Gehäuse nur in begrenztem Maße zu folgen vermag, würde es sich zwangsläufig vom Ringkolben lösen, so dass ein Zwischenraum zwischen Dichtungselement und Ringkolben ausgebildet würde. In diesem Falle wäre aber die - zur Verhinderung einer Zerstörung des membranartigen Dichtungselements zwingend erforderliche - Abstützung des Dichtungselements am Ringkolben nicht mehr gegeben. Um dem entgegenzuwirken, wird mittels der Fluidkammer eine Druckkopplung derselbigen mit dem Fluidkanal derart realisiert, dass der auf einer der Fluidkanal zugewandten ersten Stirnseite wirkende Fluiddruck jederzeit durch einen gegengleichen, auf die der Fluidkammer zugewandte zweite Stirnseite des Ringkolbens wirkenden Gegendruck ausgeglichen wird; zu diesem Zweck ist die Fluidkammer mit einer inkompressiblen Flüssigkeit befüllt. Mit anderen Worten, der Ringkolben ist entlang der Hubrichtung zwischen inkompressibler Flüssigkeit und Dichtungselement angeordnet, so dass dessen zweite Stirnseite durch die inkompressible Flüssigkeit druckbeaufschlagt wird, wohingegen die erste Stirnseite durch das den Fluidkanal durchströmende Fluid druckbeaufschlagt wird. Unter dem Begriff "inkompressible Flüssigkeit" sind vorliegend alle Flüssigkeiten erfasst, die auch bei Druckänderung ihre Dichte nicht ändern und sich folglich zur besagten Druckkopplung zwischen Fluidkanal und Ringkolben eignen. Dabei versteht sich, dass die per se inkompressible Flüssigkeit bei den hier vorliegenden Fluiddrücken von 400 bar und mehr zwangsweise eine geringfügige Kompressibilität aufweist. Solche Flüssigkeiten sind vom Wortsinn des hier verwendeten Begriffs "inkompressible Flüssigkeiten" dennoch ausdrücklich erfasst.

Eine in einer Durchgangsöffnung zwischen Fluidkammer und Fluidkanal vorgesehene Trennmembran, beispielsweise aus einem Metall, ermöglicht die zur Druckkopplung erforderliche Übertragung des im Fluidkanal herrschenden Fluiddrucks auf die inkompressible Flüssigkeit der Fluidkammer, ohne dass eine Vermischung der inkompressiblen Flüssigkeit mit dem den Fluidkanal durchströmenden Fluid stattfindet.

Da der Ringkolben zur räumlichen Trennung der Fluidkammer vom Fluidkanal dient, sind die Raumvolumina von Fluidkammer und Fluidkanal aufgrund der Beweglichkeit des Ringkolbens in Hubrichtung innerhalb eines vorbestimmten Volumenbereichs variierbar. Eine Bewegung des Ringkolbens zum Fluidkanal führt beispielsweise zu einer Vergrößerung des Raumvolumens der Fluidkammer. Da sich die in der Fluidkammer vorgesehene inkompressible Flüssigkeit in der Folge auf ein vergrößertes Raumvolumen verteilen könnte, wäre eine optimale Druckkopplung des Fluidkanals mit dem Ringkolben über die Flüssigkeit nicht mehr gewährleistet. Um dem entgegenzuwirken, kann nun an der Außenumfangsfläche des Hubkolbens im Bereich der Fluidkammer entlang der Hubrichtung eine radiale Stufe vorgesehen sein, so dass der Durchmesser des Hubkolbens entgegen der Hubrichtung, also vom Fluidkanal weg, zunimmt. Die Anordnung und Dimensionierung besagter radialer Stufe am Hubkolben erfolgt derart, dass der beim Bewegen des Hubkolbens und somit des Ringkolbens bewirkte Volumenzuwachs der Fluidkammer durch das vom Hubkolben zusätzlich eingenommene Raumvolumen wieder ausgeglichen wird. Mit anderen Worten, im gleichen Maße, wie das Raumvolumen der Fluidkammer durch die Bewegung des Ringkolbens zum Fluidkanal hin vergrößert wird, erfolgt durch Volumenverdrängung durch den Hubkolben in der Fluidkammer eine volumengleiche Reduzierung des Raumvolumens der Fluidkammer, so dass das effektive Gesamt-Raumvolumen der Fluidkammer gleichbleibt.

Bei den vorangehend im Zusammenhang mit der Verwendung eines Ringkolbens beschriebenen Ausführungsformen kann das Dichtungselement als Rollmembran ausgebildet sein, welche nicht notwendigerweise elastische Eigenschaften aufweisen muss Denn mit einer Bewegung von Hubkolben und Ringkolben und der damit verbundenen Bewegung des am Hubkolben befestigten Dichtungselements muss nicht notwendigerweise eine mechanische Dehnung des Dichtungselements verbunden sein. Dennoch empfiehlt es sich, in allen vorangehend erläuterten Szenarien, als Dichtungsmaterial für das Dichtungselement ein - elastische Eigenschaften aufweisendes - Elastomer auszuwählen.

Bei einer konstruktiv besonders einfach zu realisierenden Ausführungsform ist das Verschlusselement in der Art einer Verschlusskugel ausgebildet, die drehbar in einem Kugelhalter gelagert ist. Das Betätigungselement umfasst einen mit der Verschlusskugel zusammenwirkenden Betätigungsstift, welcher zum Bewegen der Verschlusskugel von der Verschlussposition weg mit einem axialen Endabschnitt gegen die Verschlusskugel gedrückt wird.

Um etwaige, in der Verschlusskugel auftretende Verschleißeffekte möglichst gering zu halten, kann der Betätigungsstift derart ausgebildet sein, dass er bei Kontakt mit der Verschlusskugel diese unter Ausübung eines Drehmoments um einen vorbestimmten Betrag verdreht, so dass sich die Kontaktflächen zwischen Betätigungselement und Verschlusskugel bei jeder Betätigung des Betätigungsstifts ändert.
Besagtes Drehmoment lässt sich bei einer technisch einfach zu realisierenden Ausführungsform erzeugen, indem auf einer der Verschlusskugel zugewandten Stirnseite des Betätigungsstifts eine bezüglich dessen Längsmittelachse exzentrisch angeordnete Ausnehmung vorgesehen wird, mittels welcher vom Betätigungsstift bei Kontakt mit der Verschlusskugel ein auf diese wirkendes Drehmoment erzeugt wird.
Die vorangehend erörterte Ausbildung des Betätigungsstifts derart, dass ein Drehmoment auf die Verschlusskugel ausgeübt wird, welches zu einer Verdrehung der Verschlusskugel und somit zu einer Änderung der Kontaktflächen zwischen Betätigungsstift und Verschlusskugel bei zwei aufeinanderfolgenden Betätigungen des Betätigungselements führt, besitzt eigenständigen Charakter. Weitere wichtige Merkmale und Vorteile der Erfindung ergeben sich aus den Unteransprüchen, aus den Zeichnungen und aus der zugehörigen Figurenbeschreibung anhand der Zeichnungen.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, der in den Ansprüchen definiert ist, zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: eine grobschematische Darstellung eines Beispiels einer Ventileinrichtung die nicht Teil der Erfindung ist, in einer geschlossenen Position,
- Fig. 1b: die Ventileinrichtung der Figur 1 in einer geöffneten Position,
- Fig. 2a: eine grobschematische Darstellung eines Beispiels der erfindungsgemäßen Ventileinrichtung in einer geschlossenen Position,

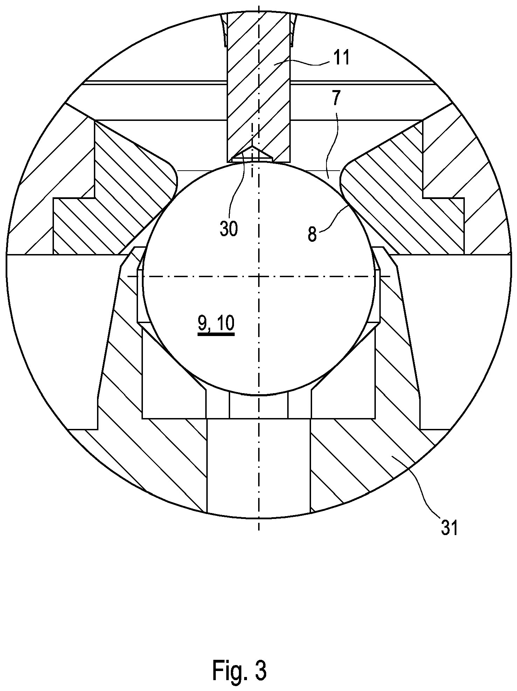

- Fig. 2c: die Ventileinrichtung der Figur 3 in einer geöffneten Position,
- Fig. 3: eine Detaildarstellung von Betätigungsstift und Verschlusskugel.

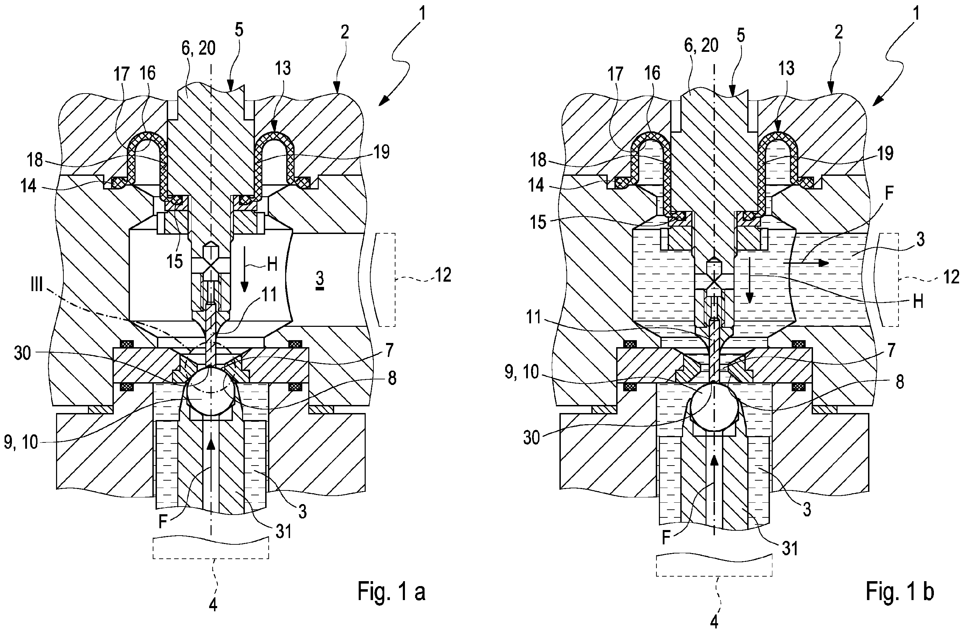

Figur 1 illustriert grobschematisch und in einem Längsschnitt ein Beispiel einer nicht erfindungsgemäßen Ventileinrichtung 1 zur Steuerung eines abrasiven Dickstoffs. Als abrasiver Dickstoffe sind im Folgenden jegliche Gemische aus flüssigen und festen Bestandteilen - wie beispielsweise Lacke oder Dämmstoffe - mit schleifender Wirkung zu verstehen. Die Ventileinrichtung 1 weist ein ausreichend dimensioniertes Gehäuse 2 auf, in welchem ein Fluidkanal 3, welcher vom abrasiven Dickstoff durchströmt wird, vorgesehen ist. Zum Einleiten des Dickstoffs in den Fluidkanal 3 besitzt die Ventileinrichtung 1 eine am Gehäuse 2 vorgesehene Einlassöffnung 4. Das Gehäuse 2 beherbergt einen Ventilkörper 5 mit einem Betätigungselement 20 in Gestalt eines Hubkolbens 6, welcher am Gehäuse 2 entlang einer Hubrichtung H verstellbar zwischen dem in Figur 1a dargestellten geschlossenen Zustand, in welchem er den Fluidkanal zum Durchströmen mit dem Dickstoff freigibt, und einem in Figur 1b gezeigten geöffneten Zustand, in welchem er den Fluidkanal 3 fluiddicht verschließt, gelagert ist.

Im Fluidkanal 3 ist eine Ventilöffnung 7 vorgesehen, die auf einer vom Hubkolben 6 abgewandten Seite von einem Ventilsitz 8 eingefasst ist. Besagte Ventilöffnung kann mittels eines Verschlusselements 9, welche das Betätigungselement 20 zum Ventilkörper 5 komplettiert und die Gestalt einer Verschlusskugel 10 aufweist, fluiddicht verschlossen werden. Die Verschlusskugel 9 ist dabei drehbar in einem Kugelhalter 31 angeordnet, welcher wiederum im Fluidkanal 3 bewegbar gelagert ist. Im geschlossenen Zustand der Ventileinrichtung 1 liegt die Verschlusskugel 10 wie in Figur 1a illustriert teilweise am Ventilsitz 8 an. In Figur 1a ist die Strömungsrichtung des Dickstoffs durch den Fluidkanal mit einem Pfeil mit dem Bezugszeichen F angedeutet. Da das Verschlusselement 9 bezüglich der Strömungsrichtung F stromauf der Ventilöffnung 7 im Fluidkanal platziert ist, sorgt die vom Dickstoff auf das Verschlusselement 9 in Strömungsrichtung F wirkende Druckbeaufschlagung dafür, dass das Verschlusselement 9 ohne Einwirkung einer äußeren Kraft gegen den Ventilsitz 8 gepresst wird und folglich die Ventilöffnung 7 verschließt. Um nun die Ventileinrichtung in den geöffneten Zustand umzuschalten, ist am Hubkolben 6 endseitig ein Betätigungsstift 11 ausgeformt, welches durch Bewegen des Hubkolbens 6 in Hubrichtung H gegen das Verschlusselement 9 gedrückt und - einschließlich des Kugelhalters 31 - entgegen dem vom Dickstoff erzeugten Fluiddruck vom Ventilsitz 8 wegbewegt werden kann, was zu einer Freigabe der Ventilöffnung 7 führt. Der Hubkolben 6 kann zum Verstellen entlang der Hubrichtung H mit einem dem einschlägigen Fachmann geläufigen externen Aktuator (nicht gezeigt) antriebsverbunden sein. Bezüglich besagter Hubrichtung H kann am Gehäuse 2 seitlich eine Auslassöffnung 12 vorgesehen sein, durch welche der in den Fluidkanal 3 eingeleitete Dickstoff wieder aus dem Gehäuse 2 entweichen kann. Einlassöffnung 4 und Auslassöffnung 12 können beispielsweise jeweils in Gestalt eines Anschlussstutzens (nicht gezeigt) ausgebildet sein, welcher die einlass- bzw. auslassseitige Anbindung der Ventileinrichtung 1 an weitere Funktionskomponenten, beispielsweise eine jeweilige Fluidleitung, eine Hochdruckpumpe o.ä., erlaubt.

Im Fluidkanal 3 ist ein membranartig ausgebildetes Dichtungselement 13 angeordnet, welches federelastische Materialeigenschaften besitzt. Bei der Materialwahl für das Dichtungselement 13 ist an ein geeignetes Elastomer auf KautschukBasis, so z.B. Ethylen-Propylen-Dien-Kautschuk (EPDM) oder Fluorkautschuk (FKM), zu denken, welches sowohl die gewünschte Elastizität als auch die im Sinne einer Membran erforderlichen Eigenschaften zur Stofftrennung zur Verfügung stellt. Aber auch die Verwendung anderer geeigneter Elastomere ist vorstellbar. Das Dichtungselement 13 wird wie in Figur 1a gezeigt mittels eines ersten Endabschnitts 14 am Gehäuse 2 und mittels eines zweiten Endabschnitts 15 an einer Außenumfangsfläche 18 des Hubkolbens 6 befestigt. Im Bereich zwischen den beiden Endabschnitten 14, 15 stützt sich das Dichtungselement 13 mit einer vom Fluidkanal 3 abgewandten Seite 16 im Bereich zwischen den beiden Endabschnitten 14, 15 abschnittsweise an einem Wandabschnitt 17 ab, welcher im Beispiel der Figuren 1a und 1b integraler Bestandteil des Gehäuses 2 ist.

In dem in Figur 1a gezeigten geschlossenen Zustand der Ventileinrichtung 1 ist der Fluidkanal 3 stromab der Ventilöffnung 7 im Wesentlichen drucklos. Wird nun die Ventilöffnung 7 wie oben beschrieben durch eine Bewegung des Hubkolben 6 in Hubrichtung H geöffnet, so kann Dickstoff auch in den Bereich des Fluidkanals 3 stromab der Ventilöffnung 7 eindringen, so dass das membranartige Dichtungselement 13 dem Fluiddruck des Dickstoffs -welcher typischerweise Werte von 400 bar oder mehr annehmen kann - ausgesetzt wird. Bei diesem, in Figur 1b gezeigten geöffneten Zustand der Ventileinrichtung 1 wird das Dichtungselement 13 im Bereich zwischen seinen beiden Endabschnitten 14, 15 gegen das Wandabschnitt 17 gepresst.

Betrachtet man die Darstellung des Wandabschnitts 17 in der Figur 1, so erkennt man, dass dieses in einem bezüglich der Hubrichtung H definierten Profil eine konkave Oberflächenkontur aufweist. Da sich das Dichtungselement 13 im Bereich zwischen seinen beiden Endabschnitten 14, 15 an besagtem Wandabschnitt 17 abstützt, weist es folglich eine zur konkaven Oberflächenkontur des Wandabschnitts 17 komplementäre, gekrümmte Oberflächenkontur auf. Da sich das Dichtungselement 13 am Wandabschnitt 17 als Teil des Gehäuses 2 abzustützen vermag, wird eine fluiddruckbedingte Rissbildung im membranartigen Dichtungselement 13 - bis hin zur vollständigen Zerstörung desselben - vermieden. Funktionsmäßig sorgt das Dichtelement dabei für einen effektiven Schutz der auf der vom Fluidkanal 3 abgewandten Seite des Dichtungselements 13 angeordneten Komponenten der Ventileinrichtung 1 - dazu zählt insbesondere der Hubkolben 6, welcher als beweglich am Gehäuse 2 gelagertes Bauteil in besonderem Maße einer Gefahr der Beschädigung durch die abrasive Wirkung des Dickstoffs ausgesetzt ist - vor Beschädigung oder gar Zerstörung.

Bei der Bewegung des Hubkolbens 6 in Hubrichtung H wird das Dichtungselement 13 im Bereich eines hülsenartig ausgebildeten Abstützungsabschnitts 19 in der Hubrichtung H elastisch gedehnt.

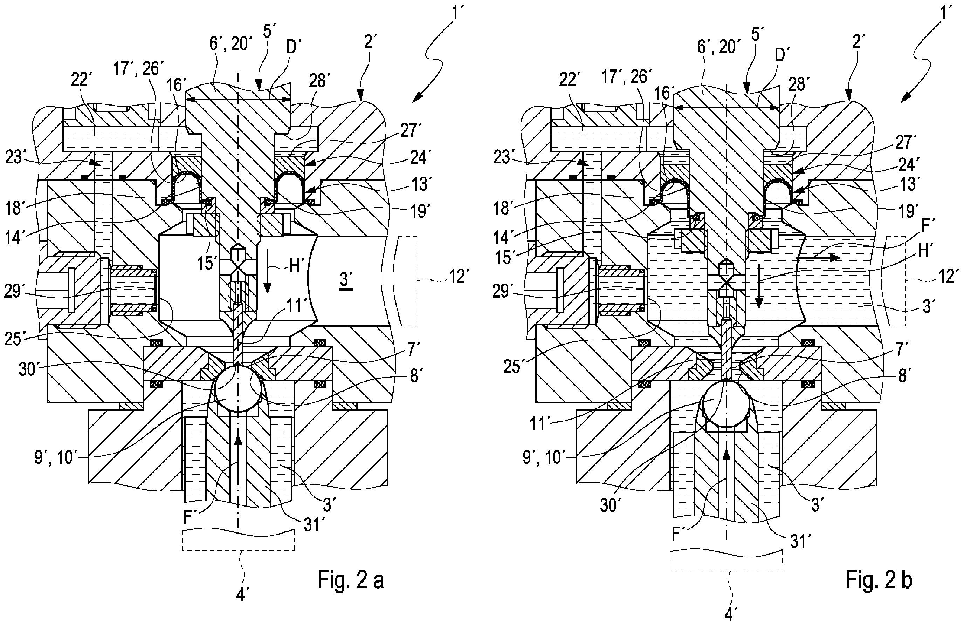

Das Dichtungselement 13 ist im Beispielszenario der Figuren 1a und 1b federelastisch, wozu das Dichtungselement 13 aus einem Dichtungsmaterial aus einem Elastomer gebildet sein kann. Dem in der Figur 1a gezeigten, geschlossenen Zustand der Ventileinrichtung 1 lässt sich nun eine Ausgangszustand des Dichtungselements zuordnen, und dem in Figur 2 gezeigten geöffneten Zustand der Ventileinrichtung lässt sich entsprechend ein gegenüber dem Ausgangszustand des Dichtungselements 13 gedehnter Zustand zuordnen. Mit anderen Worten, das federelastische Dichtungselement 13 dehnt sich bei der Bewegung des Hubkolbens 6 von seiner geschlossenen in die geöffnete Position im Bereich des Abstützungsabschnitts 19 entlang der Hubrichtung H aus. Bei einer Bewegung des Hubkolbens 6 in umgekehrter Richtung, also entgegen der Hubrichtung H, erfährt das Dichtungselement 13 aufgrund seiner federelastischen Eigenschaften entsprechend eine Kontraktion.

Figur 2 zeigt nun ein Beispiel einer erfindungsgemäßen Ventileinrichtung 1', welche sich von der in Figur 1 gezeigten Ventileinrichtung 1 darin unterscheidet, dass die Abstützung des Dichtungselements 13' nicht am Gehäuse 2' erfolgt, sondern an einem am Hubkolben 6' ausgeformten Ringkolben 24', dessen Wirkprinzip im Folgenden erläutert wird. Betrachtet man hierzu die Darstellung der Figuren 2a und 2b - Figur 2a zeigt die Ventileinrichtung analog zu Figur 1 im geschlossenen Zustand, die Figur 2b im geöffneten Zustand, so wird deutlich, dass der Fluidkanal 3' entlang der Hubrichtung H' in eine mittels des Dichtungselements 13' vom Fluidkanal 3' fluidisch getrennte Fluidkammer 23' übergeht. Die fluidische Trennung von Fluidkanal 3' und Fluidkammer 23' erfolgt zudem mittels eines am Hubkolben 6' ausgeformten, radial von diesem nach außen abstehenden und sich entlang dessen Umfangsrichtung erstreckenden Ringkolben 24'. Dieser kann als zum Hubkolben 6' separates Bauteil ausgeformt oder - alternativ dazu - integral am Hubkolben 6' ausgeformt sein. Der Ringkolben 24' ist entlang der Hubrichtung H' zwischen der in der Fluidkammer 23' vorgesehenen inkompressiblen Flüssigkeit 22' und dem Dichtungselement 13' angeordnet.

Da der Ringkolben 24' zusammen mit dem Hubkolben 6' entlang der Hubrichtung H' bewegbar ist, würde dieser beim Druckaufbau im Fluidkanal 3' zusammen mit dem Hubkolben 6' vom den Fluidkanal 3' durchströmenden Fluid entgegen der Hubrichtung H' zur Fluidkammer 23' hin gedrückt. Da das Dichtungselement 13' einer solchen Bewegung des Ringkolbens 24' aufgrund seiner jeweils endseitigen Befestigung am Gehäuse 2' nur in begrenztem Maße folgen kann, würde es sich im Bereich zwischen den Endabschnitten 14', 15' zwangsläufig vom Ringkolben 24' lösen, so dass ein unerwünschter Zwischenraum zwischen Dichtungselement 13' und Ringkolben 24' ausbilden könnte.

Um dies zu verhindern, ist im Beispiel der Figur 2 eine Druckkopplung der Fluidkammer 23' mit dem Fluidkanal 3' derart realisiert, dass der auf eine erste Stirnseite 26' des Ringkolbens 24' -welche dem Fluidkanal 3' zugewandt ist - wirkende Fluiddruck jederzeit durch einen gegengleichen, auf eine zweite Stirnseite 27' des Ringkolbens 24' -welche der Fluidkammer 23' zugewandt ist - wirkenden Gegendruck ausgeglichen wird. Zu diesem Zweck ist die Fluidkammer mit einer inkompressiblen Flüssigkeit 22' befüllt. Der Ringkolben 24' ist entlang der Hubrichtung H' zwischen Fluidkammer 23' und Dichtungselement 13' angeordnet, so dass dessen zweite Stirnseite 27' durch die inkompressible Flüssigkeit 22' druckbeaufschlagt wird, wohingegen die erste Stirnseite 26' durch das den Fluidkanal 3' durchströmende Fluid druckbeaufschlagt wird. Beide Drücke sind entgegengesetzt gleich groß, heben sich also gegenseitig auf, so dass sich der Hubkolben 6' quasi "frei" entlang der Hubrichtung H' im Fluidkanal 3' bewegen kann. Die Bewegung des Hubkolbens 6' erfolgt also im Szenario der Figur 2 in analoger Weise zum Szenario der Figur 1.

Der Hubkolben 6' ist entlang der Hubrichtung H' teilweise im Fluidkanal 3' und teilweise in der Fluidkammer 23' angeordnet. Der Wandabschnitt 17', an welchem sich das Dichtungselement 13' erfindungsgemäß abstützt, ist im Beispielszenario der Figuren 2a und 2b also durch die erste Stirnseite 26' des Ringkolbens 24' gebildet. Da im Beispiel der Figur 2 der Wandabschnitt 17' als Teil des Ringkolbens 24' beim Verstellen des Hubkolbens 6' zwischen der geöffneten und der geschlossenen Position mit diesem mitbewegt wird, erfolgt die Bewegung des Dichtungselements 13', ohne dass dieses in merklichen Maße elastisch gedehnt werden muss. Das Dichtungselement 13' muss also im Beispielszenario der Figur 2 nicht notwendigerweise federelastisch ausgebildet sein; vielmehr ist in eine Ausbildung als einfach Rollmembran völlig ausreichend.

Zwischen Fluidkammer 23' und Fluidkanal 3' ist ferner eine Durchgangsöffnung 25' vorgesehen. In dieser ist eine Trennmembran 29', beispielsweise aus einem Metall, angeordnet ist, welche die Fluidkammer 23' vom Fluidkanal 3' trennt, gleichzeitig aber über die in der Fluidkammer 23' angeordnete inkompressibel Flüssigkeit 22' eine Druckkopplung des Fluids F' im Fluidkanals 3' mit dem Ringkolben 24' sicherstellt.

Da der Ringkolben 24' eine räumlichen Trennung von Fluidkammer 23' und Fluidkanal 3' bewirkt, sind die Raumvolumina von Fluidkammer 23' und Fluidkanal 3' aufgrund der Beweglichkeit des Ringkolbens 24' in Hubrichtung H' innerhalb eines vorbestimmten Volumenbereichs variabel. Eine Bewegung des Ringkolbens 24' in der Hubrichtung H' führt folglich zu einer Vergrößerung des Raumvolumens der Fluidkammer 23'. Da sich die in der Fluidkammer 23' vorgesehene inkompressible Flüssigkeit 22' folglich auf ein vergrößertes Raumvolumen verteilen kann, wäre aufgrund des damit verbundenen Druckabfalls eine optimale Druckkopplung des Fluidkanals 3' mit dem Ringkolben 24' über die Flüssigkeit 22 ' nicht sichergestellt. Um dies zu vermeiden, ist nun an der Außenumfangsfläche 18' des Hubkolbens im Bereich der Fluidkammer 3' entlang der Hubrichtung H' eine radiale Stufe 28' vorgesehen, so dass der Durchmesser D' des Hubkolbens 6' entgegen der Hubrichtung H', also vom Fluidkanal 3' weg zunimmt. Die Anordnung und Dimensionierung besagter radialer Stufe 28' am Hubkolben 6' erfolgt derart, dass der beim Bewegen des Hubkolbens 6' und somit des Ringkolbens 24' bewirkte Volumenzuwachs der Fluidkammer 23' durch das vom Hubkolben 6' aufgrund seines vergrößerten Kolbendurchmessers D' wieder ausgeglichen wird. Dies bedeutet, dass, im gleichen Maße, wie das Raumvolumen der Fluidkammer 23' durch die Bewegung des Ringkolbens 24' zum Fluidkanal 3' hin vergrößert wird, erfolgt durch Volumenverdrängung durch den Hubkolben 6' in der Fluidkammer eine volumengleiche Reduzierung des Raumvolumens der Fluidkammer 23', so dass das effektive Gesamt-Raumvolumen der Fluidkammer 23' gleichbleibt.

Das Verschlusselement 9, 9' ist - wie bereits erläutert - im Beispielszenario in der Art einer Verschlusskugel 10, 10' ausgebildet, die drehbar im Kugelhalter 31, 31' gelagert sein kann. Das Betätigungselement 20, 20' dabei umfasst einen mit der Verschlusskugel zusammenwirkenden Betätigungsstift 11, 11', welcher zum Bewegen der Verschlusskugel von der Verschlussposition weg mit einem axialen Endabschnitt gegen die Verschlusskugel gedrückt wird.

Um in der Verschlusskugel 10, 10' auftretende Verschleißeffekte möglichst zu vermeiden, kann der Betätigungsstift 11, 11' derart ausgebildet ist, dass er bei Kontakt mit der Verschlusskugel 10, 10' diese unter Ausübung eines Drehmoments um einen vorbestimmten Betrag verdreht, so dass die Kontaktflächen von Betätigungselement 11, 11' und Verschlusskugel 10, 10' bei jedem erneuten Kontakt des Betätigungsstifts 11, 11' mit der Verschlusskugel 10, 10' geändert werden.

Besagtes Drehmoment lässt sich bei einer technisch zu realisierenden Ausführungsform erzeugen, indem auf einer der Verschlusskugel 10, 10' zugewandten Stirnseite des Betätigungsstifts 11, 11' eine bezüglich dessen Längsmittelachse exzentrisch angeordnete Ausnehmung 30, 30' vorgesehen wird, mittels welcher vom Betätigungsstift 11, 11' bei Kontakt mit der Verschlusskugel 10, 10' ein auf diese wirkendes Drehmoment erzeugt wird. In Variante kann auch daran gedacht sein, den Betätigungsstift 11, 11' mit einer konzentrischen Ausnehmung zu versehen und den gesamten Betätigungsstift 11, 11' exzentrisch zur Verschlusskugel 10, 10' anzuordnen.

## Patentansprüche

1. Ventileinrichtung (1') zum Steuern eines Fluids, insbesondere eines abrasiven Dickstoffs,
- mit einem einen Fluidkanal (3') aufweisenden Gehäuse (2'),
- mit einem Ventilkörper (5'), welcher am Gehäuse (2') verstellbar zwischen einem geöffneten Zustand, in welchem er den Fluidkanal (3') zum Durchströmen mit dem Fluid (F') freigibt, und einem geschlossenen Zustand, in welchem er den Fluidkanal (3') fluiddicht verschließt, gelagert ist,
- mit einem membranartig ausgebildeten Dichtungselement (13') welches mit einem ersten Endabschnitt (14') am Gehäuse (2') und mit einem zweiten Endabschnitt am Ventilkörper (5') befestigt ist,
- wobei sich das Dichtungselement (13') wenigstens im geöffneten Zustand des Ventilkörpers (5') mit einer vom Fluidkanal (3') abgewandten Seite im Bereich zwischen den beiden Endabschnitten (14', 15') an einem Wandabschnitt (17') abstützt, **dadurch gekennzeichnet, dass**
- der Fluidkanal (3') entlang einer Hubrichtung (H') eines Hubkolbens (6') in eine fluidisch mittels des Dichtungselements (13')vom Fluidkanal (3') fluidisch getrennte und mit einer inkompressiblen Flüssigkeit (22') befüllte Fluidkammer (23') übergeht, so dass der Hubkolben (6') entlang der Hubrichtung (H') teilweise im Fluidkanal (3') und teilweise in der Fluidkammer (23') angeordnet ist,
- am Hubkolben (6') ein radial nach außen abstehender und sich entlang dessen Umfangsrichtung erstreckender Ringkolben (24') ausgeformt ist,
- der Wandabschnitt (17') durch eine erste Stirnseite (26') des Ringkolbens (24') gebildet ist,
- zwischen Fluidkammer (23') und Fluidkanal (3') eine Durchgangsöffnung (25') vorgesehen ist, in welcher eine Trennmembran (29') angeordnet ist, mittels welcher der Fluidkanal (3') mit dem Ringkolben (24') druckgekoppelt oder druckkoppelbar ist.

2. Ventileinrichtung (1') nach Anspruch 1,
**dadurch gekennzeichnet, dass**
der Ringkolben (24') entlang der Hubrichtung (H') zwischen der inkompressiblen Flüssigkeit (22') und dem Dichtungselement (13') angeordnet ist, so dass eine der ersten Stirnseite (26') gegenüberliegende zweiten Stirnseite (27') des Ringkolbens (24') der inkompressiblen Flüssigkeit (22') ausgesetzt ist.

3. Ventileinrichtung (1') nach einem der vorhergehenden Ansprüche,
**dadurch gekennzeichnet, dass**
an einer Außenumfangsfläche (18') des Hubkolbens (6') im Bereich der Fluidkammer (23') entlang der Hubrichtung (H') eine radiale Stufe (28') vorgesehen ist.

4. Ventileinrichtung nach einem der Ansprüche 1 bis 3,
**dadurch gekennzeichnet, dass**
das Dichtungselement (13') als Rollmembran ausgebildet ist.

5. Ventileinrichtung (1') nach einem der vorhergehenden Ansprüche, **dadurch gekennzeichnet, dass**
das Dichtungselement (13') ein Dichtungsmaterial aus einem Elastomer umfasst.

## Claims

1. Valve device (1') for controlling a fluid, in particular an abrasive thick matter,
- having a housing (2') which has a fluid channel (3'),
- having a valve member (5') which is supported on the housing (2') so as to be able to be adjusted between an open state, in which it releases the fluid channel (3') for the fluid (F') to flow through, and a closed state, in which it closes the fluid channel (3') in a fluid-tight manner,
- having a sealing element (13') which is constructed in a diaphragm-like manner and which is secured with a first end portion (14') to the housing (2') and with a second end portion to the valve member (5'),
- wherein the sealing element (13') at least in the open state of the valve member (5') is supported on a wall portion (17') with a side facing away from the fluid channel (3') in the region between the two end portions (14', 15'),
**characterised in that**
- the fluid channel (3') merges in a lifting direction (H') of a lifting piston (6') into a fluid chamber (23') which is separated in fluid terms from the fluid channel (3') by means of the sealing element (13') and which is filled with an incompressible fluid (22') so that the lifting piston (6') is arranged in the lifting direction (H') partially in the fluid channel (3') and partially in the fluid chamber (23'),
- an annular piston (24') which protrudes radially outwards and which extends in the peripheral direction thereof is formed on the lifting piston (6'),
- the wall portion (17') is formed by a first end face (26') of the annular piston (24'),
- there is provided between the fluid chamber (23') and fluid channel (3') a through-opening (25') in which there is arranged a separation diaphragm (29') by means of which the fluid channel (3') is pressure-coupled or can be pressure-coupled to the annular piston (24').

2. Valve device (1') according to claim 1,
**characterised in that**
the annular piston (24') is arranged in the lifting direction (H') between the incompressible fluid (22') and the sealing element (13') so that a second end face (27') of the annular piston (24') opposite the first end face (26') is subjected to the incompressible fluid (22').

3. Valve device (1') according to any one of the preceding claims,
**characterised in that**
a radial step (28') is provided on an outer peripheral face (18') of the lifting piston (6') in the region of the fluid chamber (23') in the lifting direction (H').

4. Valve device according to any one of claims 1 to 3,
**characterised in that**
the sealing element (13') is constructed as a roller diaphragm.

5. Valve device (1') according to any one of the preceding claims
**characterised in that**
the sealing element (13') comprises a sealing material comprising an elastomer material.

## Revendications

1. Dispositif de vanne (1') destiné à la commande d'un fluide, en particulier d'un liquide épais abrasif,
- avec une cage (2') comportant un canal de fluide (3'),
- avec un corps de vanne (5') qui est logé au niveau de la cage (2') de manière à pouvoir être déplacé entre un état ouvert dans lequel il libère le canal de fluide (3') pour le passage du fluide (F') et un état fermé dans lequel il ferme le canal de fluide (3') de manière étanche au fluide,
- avec un élément d'étanchéité (13') qui est réalisé à la manière d'une membrane et qui est fixé avec un premier tronçon terminal (14') à la cage (2') et avec un deuxième tronçon terminal au corps de vanne (5'),
- dans lequel, au moins à l'état ouvert du corps de vanne (5'), l'élément d'étanchéité (13') s'appuie à un tronçon de paroi (17') avec un côté éloigné du canal de fluide (3') dans la zone entre les deux tronçons terminaux (14', 15'),
**caractérisé en ce que**
- le canal de fluide (3') se transforme, le long d'une direction d'élévation (H') d'un piston élévateur (6'), en une chambre de fluide (23') séparée, pour ce qui est du fluide, du canal de fluide (3') au moyen de l'élément d'étanchéité (13') et remplie d'un liquide incompressible (22') de telle sorte que le piston élévateur (6') est agencé, le long de la direction d'élévation (H'), en partie dans le canal de fluide (3') et en partie dans la chambre de fluide (23'),
- au niveau du piston élévateur (6') est formé un piston annulaire (24') qui dépasse de façon radiale vers l'extérieur et qui s'étend le long de la direction circonférentielle dudit piston élévateur,
- le tronçon de paroi (17') est formé par un premier côté frontal (26') du piston annulaire (24'),
- entre la chambre de fluide (23') et le canal de fluide (3') est prévue une ouverture de passage (25') dans laquelle est agencée une membrane séparatrice (29') au moyen de laquelle le canal de fluide (3') est ou peut être couplé par la pression au piston annulaire (24').

2. Dispositif de vanne (1') selon la revendication 1, **caractérisé en ce que** le piston annulaire (24') est agencé, le long de la direction d'élévation (H'), entre le liquide incompressible (22') et l'élément d'étanchéité (13') de telle sorte qu'un deuxième côté frontal (27') du piston annulaire (24') qui est à l'opposé du premier côté frontal (26') est soumis au liquide incompressible (22').

3. Dispositif de vanne (1') selon l'une quelconque des revendications précédentes, **caractérisé en ce qu'**un gradin radial (28') est prévu, le long de la direction d'élévation (H'), au niveau d'une surface circonférentielle extérieure (18') du piston élévateur (6') dans la zone de la chambre de fluide (23').

4. Dispositif de vanne selon l'une quelconque des revendications 1 à 3, **caractérisé en ce que** l'élément d'étanchéité (13') est réalisé comme une membrane à rouleau.

5. Dispositif de vanne (1') selon l'une quelconque des revendications précédentes, **caractérisé en ce que** l'élément d'étanchéité (13') comprend un matériau d'étanchéité en un élastomère.
